Europäisches Patentamt

European Patent Office

Office européen des brevets

(19)

(11) **EP 1 097 412 B1**

(12) **FASCICULE DE BREVET EUROPEEN**

(45) Date de publication et mention
de la délivrance du brevet:
**23.10.2002 Bulletin 2002/43**

(21) Numéro de dépôt: **98937609.0**

(22) Date de dépôt: **10.07.1998**

(51) Int Cl.[7]: **G05D 7/06**

(86) Numéro de dépôt international:
**PCT/FR98/01501**

(87) Numéro de publication internationale:
**WO 00/003314 (20.01.2000 Gazette 2000/03)**

(54) **DISPOSITIF FORMANT REGULATEUR ELECTRONIQUE DE DEBIT DE FLUIDE**

VORRICHTUNG ZUR REGELUNG DES DURCHFLUSSES EINES FLUIDS

DEVICE FORMING AN ELECTRONIC REGULATOR OF A FLUID FLOW

(84) Etats contractants désignés:
**BE CH DE ES FR GB IT LI NL SE**

(43) Date de publication de la demande:
**09.05.2001 Bulletin 2001/19**

(73) Titulaire: **In-Vent SA**
**92147 Clamart (FR)**

(72) Inventeurs:
• **MAILLOT, Jean-Pierre**
**F-78690 Les Essarts Le Roi (FR)**

• **PERRUCHOT, François**
**F-75015 Paris (FR)**
• **DESTREZ, Philippe**
**F-92190 Meudon (FR)**

(74) Mandataire: **David, Alain**
**Cabinet Beau de Loménie**
**158, rue de l'Université**
**75340 Paris Cedex 07 (FR)**

(56) Documents cités:
**US-A- 4 276 482        US-A- 4 370 776**
**US-A- 5 251 815**

## Description

Domaine de la technique

L'invention est relative à un dispositif formant convertisseur d'énergie pneumatique ou hydraulique en énergie électrique, du type composé d'un moteur pneumatique ou hydraulique entraîné par le fluide et associé à un générateur électrique.

Art antérieur

Des dispositifs de ce type sont utilisés lorsque l'autonomie en énergie électrique est nécessaire, notamment dans le domaine des machines pneumatiques portatives et dans le domaine des systèmes de ventilation autonomes. Un ventilateur de réanimation est un appareil conçu pour fournir un débit ou une pression de gaz donnés afin d'assurer la ventilation contrôlée ou assistée d'un patient. Dans le domaine de l'urgence, ces appareils sont nécessairement autonomes pour pouvoir être utilisés dans toutes les conditions d'intervention. L'alimentation de l'électronique se fait alors à partir d'une batterie.

Le document EP 0 255 433 décrit une machine pneumatique portative avec électronique de commande incorporée utilisant ce principe. Le circuit électronique de commande et de contrôle du fonctionnement de la machine pneumatique incorporé au corps de ladite machine est alimenté en courant délivré par le générateur électrique, et le générateur est agencé pour délivrer également des signaux représentatifs d'au moins un paramètre de fonctionnement de la machine utilisable par ledit circuit.

Le document US 5370112 décrit un procédé et un dispositif pour alimenter en puissance des systèmes portables d'alimentation en oxygène, comportant des moyens adaptés pour débiter des doses prédéterminées de gaz à inhaler par un patient, des moyens pour extraire l'énergie desdites doses de gaz lorsque les doses de gaz sont envoyées vers le patient et pour convertir l'énergie ainsi extraite en énergie électrique et des moyens pour utiliser cette énergie électrique pour alimenter en énergie le système.

Ces dispositifs connus donnent généralement satisfaction, mais présentent plusieurs inconvénients, dont le principal est que la régulation électronique du débit, lorsqu'elle est nécessaire, doit être assurée dans ces systèmes par un organe mécanique supplémentaire, par exemple une servovalve proportionnelle. Outre le surcoût entraîné, la puissance électrique nécessaire pour assurer cette fonction peut être supérieure à la puissance pneumatique ou hydraulique potentielle du fluide sous pression, en particulier à faible débit, comme c'est le cas par exemple en ventilation artificielle.

Définition de l'invention

L'invention a pour but de proposer un nouveau principe d'auto-régulation à partir de ce type de dispositif en vue de disposer d'un régulateur électronique de débit autonome fonctionnant même à faible débit et pouvant également servir de source d'énergie électrique pour l'alimentation d'un circuit électronique d'asservissement et de fonctions électriques supplémentaires.

L'invention a pour objet un dispositif formant convertisseur d'énergie pneumatique ou hydraulique en énergie électrique, du type composé d'un moteur pneumatique ou hydraulique entraîné par le fluide et associé à un générateur électrique relié à un circuit d'asservissement, caractérisé en ce que le circuit d'asservissement purement électronique permet de réguler le débit de fluide délivré par le moteur en contrôlant la puissance électrique totale consommée aux bornes du générateur.

L'invention repose sur le fait que le moteur pneumatique ou hydraulique, le générateur électrique et le circuit d'asservissement électronique permettent de réguler directement le débit sans adjonction d'un organe mécanique de régulation externe de débit supplémentaire comme le requièrent les dispositifs de l'art antérieur.

L'ajustement de l'impédance d'entrée du circuit d'asservissement connectée au générateur électrique permet de contrôler la force de contre réaction appliquée par le générateur électrique sur le moteur pneumatique ou hydraulique, donc sa vitesse de déplacement reliée elle-même directement au débit du fluide à travers le moteur.

Selon d'autres caractéristiques de l'invention :

- le circuit d'asservissement peut comporter un moyen de stockage d'énergie électrique, tels qu'un condensateur ou une batterie ; le moyen de stockage permet d'assurer, si nécessaire, une puissance électrique externe constante à partir d'un débit variable.

- le circuit d'asservissement peut aussi comporter un circuit permettant de contrôler la vitesse d'alimentation ou de charge du moyen de stockage d'énergie et donc la puissance instantanée stockée.

- le circuit d'asservissement peut aussi comporter un moyen réglable de dissipation d'énergie électrique par effet Joule permettant de contrôler la puissance électrique consommée.

- le circuit d'asservissement peut encore comporter un circuit d'alimentation délivrant une tension constante à partir du moyen de stockage de l'énergie électrique et servant d'alimentation électrique aux circuits électriques associés.

Si le générateur électrique peut fonctionner de manière réversible, il est possible, si l'énergie stockée est suffisante ou lorsqu'une source d'énergie électrique extérieure est disponible, d'augmenter les plages de régulation en utilisant le générateur électrique comme moteur. De même, le débit régulé par l'invention peut être utilisé directement ou indirectement pour la commande d'une vanne de débit proportionnelle à commande pneumatique ou hydraulique.

Lorsque le dispositif est soumis à une consigne de débit en créneau comportant une phase à débit nul, le moteur durant cette phase est mis en court-circuit et le générateur électrique est relié à une impédance de valeur élevée, de telle sorte que ledit convertisseur peut poursuivre son mouvement sous l'effet de l'inertie. Ceci permet, si nécessaire, de diminuer le temps de montée permettant d'atteindre le débit de consigne demandé pendant la phase à débit non nul.

Selon un mode de réalisation de l'invention, le dispositif comporte au moins deux ensembles structurellement identiques associés à au moins deux flux d'entrée distincts, pour produire au moins deux flux de sortie distincts aptes à être mélangés entre eux, de manière à réguler et contrôler simultanément le débit et la composition du mélange desdits flux.

Chaque ensemble peut être indépendant dans son fonctionnement ; ou, alternativement, les circuits d'asservissement de deux ensembles peuvent être adaptés pour contrôler la proportion relative de chacun des deux flux correspondants dans ledit mélange.

Selon une variante avantageuse, au moins un premier ensemble présente un fonctionnement en compresseur de manière à utiliser un fluide d'entrée à pression atmosphérique ; dans ce cas, de préférence, ce premier ensemble fonctionnant en compresseur est entraîné mécaniquement par un autre ensemble fonctionnant normalement en moteur, ou alimenté électriquement à partir de la puissance électrique produite par cet autre ensemble.

L'un des dispositifs décrits précédemment peut être utilisé comme régulateur de débit d'un ventilateur de réanimation autonome en énergie électrique, le circuit d'asservissement présentant un fonctionnement cyclique représentatif d'une ventilation contrôlée ou assistée. Selon la configuration, le système peut servir à réguler le débit et la composition du gaz délivré au patient à partir d'air et/ou d'oxygène dont l'un au moins est sous pression.

L'un des dispositifs décrits précédemment peut aussi être utilisé pour mélanger deux liquides sous pression à température différente, par exemple de l'eau, afin de contrôler le débit et la température du mélange de sortie.

Brève description des dessins

L'invention sera mieux comprise grâce à la description, qui va suivre, donnée à titre d'exemples non limitatifs, de plusieurs modes de réalisation représentés sur les dessins annexés et sur lesquels :

-    la figure 1 est un schéma de principe du dispositif de régulation selon l'invention ;

-    la figure 2 montre les relations existant entre débit et puissance au niveau du dispositif de la figure 1 ;

-    la figure 3 illustre un exemple de réalisation du circuit d'asservissement de l'invention ;

-    la figure 4 représente schématiquement un autre exemple de réalisation de l'invention permettant de mélanger deux fluides ; et

-    la figure 5 représente schématiquement une variante de l'exemple précédent de réalisation de l'invention.

Description détaillée de modes de réalisation particuliers de l'invention

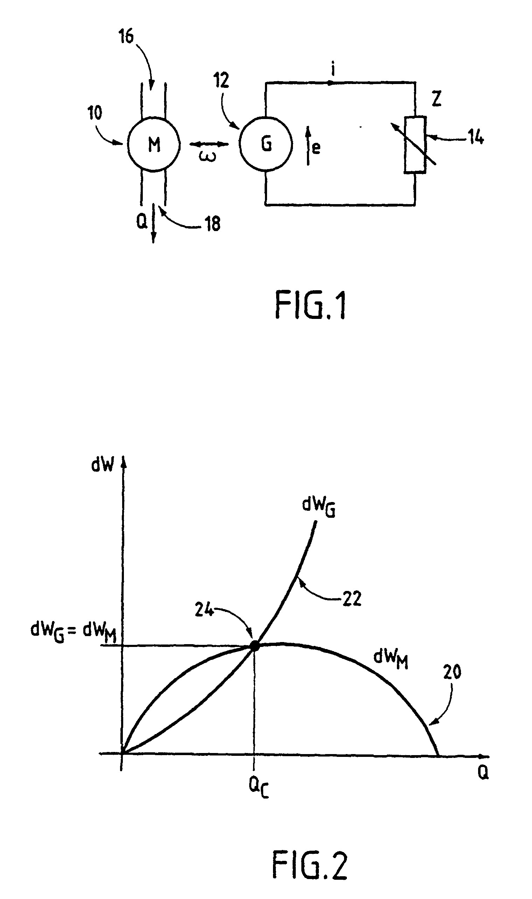

Sur la figure 1, un dispositif de régulation selon l'invention comporte un moteur pneumatique ou hydraulique 10 associé à un générateur électrique 12. La sortie du générateur est reliée à un circuit d'asservissement 14 caractérisé par une impédance d'entrée variable Z. tandis que le moteur est soumis en 16 à un flux d'entrée à une pression donnée $P_m$ et fournit un flux de sortie en 18 à une pression $P_{out}$. La relation entre débit volumique traversant le moteur 10, et sa vitesse de rotation est donnée par l'équation suivante :

$$Q = Q_m + Q_f \qquad Q_m = V_0 \; x \; \omega$$

où $\omega$ est la vitesse de rotation, $V_0$ est le volume balayé par le moteur à chaque rotation, $Q$ est le débit total, $Q_m$ le débit moteur et $Q_f$ un débit de fuite .

La différence de pression entre l'entrée et la sortie du moteur pneumatique fournit une puissance mécanique exprimée par la formule suivante :

$$P_M = \Delta P \; x \; Q_m$$

où $P_M$ est la puissance, $\Delta P$ est la chute de pression effective comprenant les différentes pertes de charge pour le débit $Q_m$ passant par le moteur pneumatique. La puissance mécanique réellement disponible $dW_M$ est :

$$dW_M = P_M - dW_F$$

où $dW_F$ représente la puissance dissipée par frottement.

Le moteur pneumatique ou hydraulique peut être, à titre d'exemple, un moteur à palettes ou à engrenages. Dans le cas de l'utilisation dans le domaine médical, ce moteur est fabriqué à partir de matériau autolubrifiant.

Le moteur 10 et le générateur 12 peuvent être couplés par couplage mécanique direct ou indirect, par exemple inductif. Ils peuvent aussi partager le même rotor et/ou le même stator.

Le générateur électrique entraîné par le moteur est, de préférence, un alternateur ou une dynamo, ou tout autre moyen de génération électrique caractérisé par la relation entre vitesse de rotation ω et la force électromotrice e du générateur:

$$e = k \ x \ \omega$$

Du fait de la proportionnalité entre la force électromotrice $e$ du générateur électrique et la vitesse de rotation du moteur ω, la force électromotrice $e$ est également proportionnelle au débit $Q_m$ traversant le moteur .

Les relations liant débit et puissance au sein du dispositif précité sont illustrées sur la figure 2.

L'invention repose sur le fait que le moteur 10 est caractérisé par une relation 20 entre débit $Q$ et puissance mécanique $dW_M$ délivrée, tandis que le générateur électrique 12 est caractérisé par une relation 22, dépendant de l'impédance 14, entre puissance électrique fournie $dW_G$ et vitesse de rotation ω donc débit Q.

Pour une valeur de l'impédance 14 donnée, l'équilibre mécanique stable entre les deux éléments se fait en un point 24 correspondant à une puissance mécanique délivrée $dW_M$ égale à la puissance électrique fournie $dW_G$, équilibre correspondant à un débit d'équilibre $Q_C$ délivré par le moteur 10. L'ajustement de l'impédance 14 permet donc de déplacer le point de fonctionnement 24 et d'ajuster le débit $Q_C$ en fonction d'une consigne extérieure déterminée (non représentée).

Dans le régime de fonctionnement le plus simple, la puissance électrique fournie par le générateur électrique (produit $e \ x \ i$) est répartie entre une puissance constante consommée par l'électronique et imposant le débit minimum moyen d'utilisation du régulateur en fonctionnement autonome et une puissance $P_J$ dissipée par effet Joule permettant d'ajuster la puissance totale consommée pour assurer la régulation. Cette puissance constante consommée par l'électronique peut aussi provenir d'un moyen de stockage temporaire, alimenté à partir du générateur, ce qui permet un fonctionnement continu indépendant du débit instantané demandé.

L'invention fournit ainsi un nouveau dispositif de régulation pouvant être employé dans tout appareil demandant le contrôle instantané d'un débit pour atteindre une valeur de consigne de pression ou de débit mesurés en déporté sans l'adjonction d'un organe mécanique de régulation externe de débit supplémentaire comme une vanne ou un clapet.

La puissance maximale disponible est $dW = Q \ x \ \Delta P$, mais les points de fonctionnement 24 réellement accessibles par le dispositif sont limités par les caractéristiques et rendements des différents sous-ensembles. Le débit minimum régulé $Q_m$ est fixé par la valeur minimum de l'impédance variable 14 qui correspond à l'impédance interne du générateur électrique. Le débit maximum est fixé par la vitesse du moteur à charge nulle. Il existe également une contrainte sur les moyennes de débit qui doivent être compatibles avec la moyenne de la puissance consommée, et sur la répartition temporelle qui doit être compatible avec l'énergie maximum pouvant être stockée dans Z.

Le dispositif décrit précédemment permet de réguler un débit sans apport d'énergie électrique extérieur avec les restrictions indiquées, mais il est possible d'augmenter les plages de régulation si une source d'énergie électrique extérieure est disponible ou si suffisamment d'énergie électrique a été stockée dans l'impédance Z. Sous réserve que le générateur électrique 12 soit réversible, celui-ci peut être utilisé comme moteur électrique. Ceci permet de diminuer le débit minimum accessible en augmentant le freinage appliqué au moteur 10 ou d'augmenter le débit maximum et de diminuer les temps de réponse en l'accélérant.

Le débit régulé Q à travers le moteur pneumatique ou hydraulique peut directement être utilisé comme débit principal. Il peut aussi, si il est associé à une restriction, servir de source de pression pour la commande d'une vanne proportionnelle à commande pneumatique ou hydraulique. Les deux débits peuvent être additionnés ou non pour former le débit principal délivré.

Dans le cas d'une consigne de débit en créneau comportant une phase à débit nul, le temps de montée peut être réduit en utilisant l'inertie de l'ensemble moteur et générateur. Dans ce mode de fonctionnement particulier, l'alimentation en fluide du moteur est remplacée par un court-circuit entre l'entrée et la sortie pendant les phases où la consigne est nulle. Dans le même temps, le freinage du générateur est réduit au minimum, par exemple en connectant une impédance de valeur élevée à ses bornes, ce qui permet à l'ensemble moteur et générateur de poursuivre son mouvement sous l'effet de l'inertie. A la fin de la période à débit nul, la vitesse du moteur est peu différente de la vitesse nécessaire pour délivrer le débit demandé, ce qui permet d'atteindre rapidement la consigne. Dans ce cas particulier, l'inertie totale du système est choisie de manière à réduire la perte de vitesse lors de la phase à débit nul. tout en conservant un temps de stabilisation de l'ensemble raisonnable. Cette inertie peut provenir directement du moteur et/ou du générateur ou de l'ajout d'un volant d'inertie.

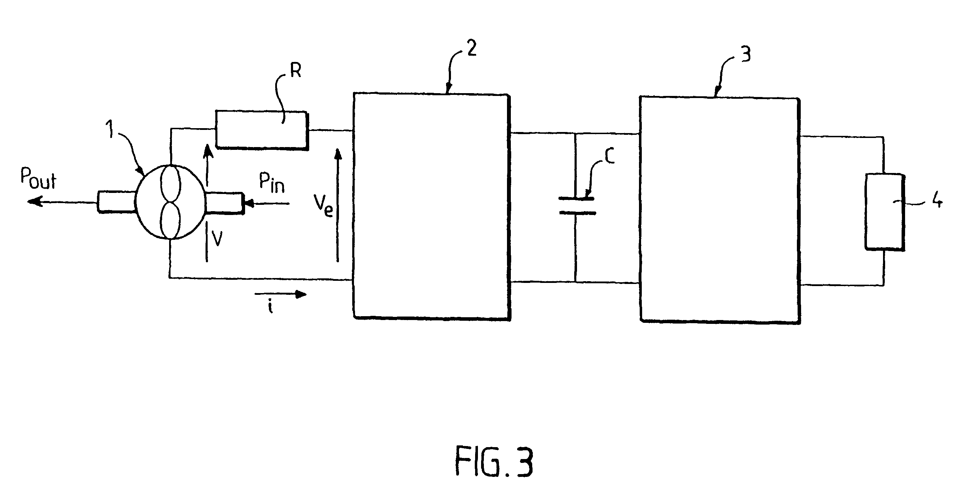

La figure 3 est donnée à titre d'exemple de réalisation du circuit d'asservissement 14 d'impédance d'entrée variable permettant de réguler la puissance consommée par le générateur électrique 12.

On retrouve bien entendu d'une part le moteur pneumatique et le générateur électrique qui sont dans cet exemple associés 1 et d'autre part un circuit d'asservissement comportant un moyen variable $R$ de dissipation d'énergie électrique par effet Joule $P_J$ en vue de régler la puissance électrique dissipée et un moyen de stockage d'énergie électrique tels qu'un condensateur $C$ ou une batterie électrique. Le circuit d'asservissement comprend en outre deux circuits de régulation dont le premier, référencé 2, effectue le contrôle instantané de la puissance transmise au condensateur et le deuxième, référencé 3, fait fonction de circuit d'alimentation à tension constante d'une charge fixe 4 symbolisant l'ensemble de l'électronique de régulation et éventuellement une charge extérieure supplémentaire.

La résistance variable R peut être réalisée à partir d'un régulateur à découpage avec contrôle de la tension de sortie reliée à une résistance ohmique fixe. Le circuit 3 peut être un régulateur à découpage assurant une tension de sortie constante. Le circuit 2 régule la vitesse d'alimentation ou de charge du moyen de stockage, c'est à dire la puissance instantanée stockée. Dans le cas d'un condensateur, cela consiste à contrôler V x dV/dt. Ceci peut être réalisé ,par exemple, à partir d'un circuit de régulation en tension dont la valeur de référence est augmentée d'un incrément constant dépendant de la puissance de charge recherchée à des intervalles de temps croissants.

Pour assurer l'autonomie même à faible débit, ce dispositif permet de stocker la puissance électrique fournie pendant les phases de débit plus important pour maintenir l'alimentation électrique constante lors de la phase de débit faible ou nul. La régulation du débit $Q$ est alors effectuée par ajustements de la puissance fournie au moyen de stockage d'énergie électrique (tel que le condensateur $C$) et de la tension aux bornes de la résistance variable R permettant une dissipation de puissance par effet Joule.

Dans d'autres modes de réalisation non représentés, le circuit de dissipation peut être relié en parallèle avec le circuit de charge 2 et le circuit 3 peut être alternativement relié au système de stockage $C$ ou directement au générateur de l'ensemble 1.

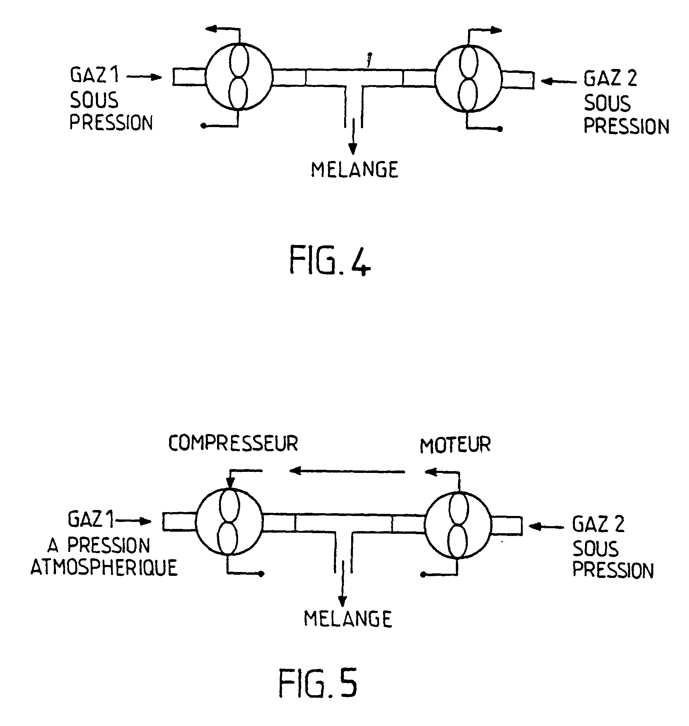

Sur la figure 4, on a représenté un autre exemple de réalisation de l'invention, qui comporte au moins deux ensembles structurellement identiques conformes à l'invention dont les circuits d'asservissement (analogues à ceux de la figure 1) ne sont pas représentés.

Chaque ensemble est associé à au moins un flux d'entrée et permet de produire un flux de sortie. Les flux d'entrée et de sortie de deux ensembles sont distincts entre eux. mais les flux de sortie sont aptes à être mélangés entre eux. Dans le cas où chaque ensemble est indépendant dans son fonctionnement, on peut régler indépendamment le débit et la composition du flux de sortie.

Dans le cas où les circuits d'asservissement de deux ensembles sont adaptés pour contrôler la proportion relative de chacun de deux flux correspondants dans un mélange, on peut varier continùment une proportion relative d'un flux par exemple pour démarrer une réaction chimique et réguler ensuite la vitesse de réaction.

Dans tous les cas, grâce au mode de réalisation de la figure 4, il est possible de réguler et de contrôler simultanément le débit et la composition du mélange desdits flux de sortie.

Sur la figure 5, on a représenté une variante de réalisation de la figure 4, qui comporte au moins un ensemble (dont le circuit d'asservissement n'est pas représenté) apte à fonctionner en compresseur. Le fonctionnement en compresseur permet d'utiliser un fluide d'entrée à la pression atmosphérique, en général de l'air, de manière à permettre un mélange à taux variable et à pression supérieure à la pression atmosphérique.

L'utilisation de l'air extérieur permet avantageusement de limiter le nombre de sources de gaz sous pression utilisées, par exemple, dans le cas d'un ventilateur de réanimation, où le taux d'oxygène dans le gaz insufflé au patient est contrôlé par mélange d'air à la pression atmosphérique et d'oxygène sous pression. Actuellement, on utilise à cet effet un mélange par venturi, ce mélange se faisant à taux constant dans une plage étroite de débits. Au contraire, la solution proposée par cette variante de réalisation de l'invention permet d'assurer un mélange constant dans une plage étendue de débits et pour différentes valeurs de la composition du mélange.

Pour assurer le fonctionnement en compresseur, on utilise avantageusement un autre ensemble fonctionnant normalement en moteur pneumatique ou hydraulique. En effet, cet autre ensemble modulaire peut fournir une puissance d'entraînement mécanique directement par couplage avec le moteur ou le générateur électrique ; ou, alternativement, le générateur électrique peut fournir une puissance électrique pour alimenter directement l'ensemble fonctionnant en compresseur. Cet entraînement mécanique ou cette alimentation électrique est schématisé par la flèche de liaison entre les deux ensembles.

L'invention permet également dans ce cas de fournir un système autonome fonctionnant en mélangeur électronique et permettant de réguler à la fois le débit total et la composition du mélange effectué à partir d'au moins un flux à pression égale ou inférieure à la pression atmosphérique.

Bien que particulièrement utilisé pour la ventilation, notamment dans le cadre de la réanimation d'urgence, le dispositif selon l'invention peut s'appliquer à tous les domaines dans lesquels on utilise une conversion d'énergie pneumatique ou hydraulique en énergie électrique en vue de fournir un ensemble modulaire électriquement autonome comportant son propre circuit d'asservissement.

L'un des dispositifs décrit précédemment peut par exemple servir de mélangeur électronique permettant la régulation du débit et de la température de l'eau à partir de deux sources sous pression à températures différentes.

Les moyens de stockage et de dissipation d'énergie peuvent être de nature quelconque, comprendre des composants électroniques actifs ou passifs sans sortir du cadre de la présente invention.

**Revendications**

1. Dispositif formant convertisseur d'énergie pneumatique ou hydraulique en énergie électrique, du type composé d'un moteur pneumatique ou hydraulique (10) entraîné par un fluide sous pression (16) et associé à un générateur électrique (12 ; 1) relié à un circuit d'asservissement (14) ayant une impédance d'entrée (Z), **caractérisé en ce que** ledit circuit d'asservissement comporte des moyens (2, 3 ; R, C) permettant de réguler directement le débit de fluide délivré par le dispositif, sans l'adjonction d'un organe mécanique supplémentaire de régulation externe de débit, en ajustant ladite impédance d'entrée (Z) connectée aux bornes du générateur (12; 1).

2. Dispositif selon la revendication 1, **caractérisé en ce que** ledit circuit d'asservissement permet la régulation de la puissance électrique totale consommée aux bornes du générateur.

3. Dispositif selon la revendication 1 ou la revendication 2, **caractérisé en ce que**, pour assurer un fonctionnement autonome en énergie électrique, le générateur électrique fournit une puissance électrique moyenne suffisante pour alimenter le circuit d'asservissement.

4. Dispositif selon la revendication 3, **caractérisé en ce que** le générateur électrique peut fonctionner de manière intermittente en moteur électrique, par exemple lorsqu'une source extérieure d'énergie électrique est disponible, ce qui permet d'augmenter les plages de régulation.

5. Dispositif selon l'une quelconque des revendications précédentes, **caractérisé en ce que** ledit circuit d'asservissement comporte un moyen de stockage d'énergie électrique, tels qu'un condensateur (C) ou une batterie.

6. Dispositif selon la revendication 5, **caractérisé en ce que** ledit circuit d'asservissement comporte un circuit de contrôle (2) de la vitesse d'alimentation ou de charge dudit moyen de stockage d'énergie électrique.

7. Dispositif selon la revendication 5 ou la revendication 6, **caractérisé en ce que** ledit circuit d'asservissement comporte un circuit d'alimentation (3) délivrant une tension constante à partir du moyen de stockage d'énergie électrique (C).

8. Dispositif selon l'une quelconque des revendications précédentes, **caractérisé en ce que** ledit circuit d'asservissement comporte un moyen réglable (R) de dissipation d'énergie électrique par effet Joule permettant de réguler la puissance électrique consommée.

9. Dispositif selon l'une quelconque des revendications précédentes, **caractérisé en ce que** lorsqu'il est soumis à une consigne de débit en créneau comportant une phase à débit nul, le moteur (10) durant cette phase est mis en court-circuit et le générateur électrique (12) est relié à une impédance de valeur élevée, de telle sorte que ledit convertisseur (1) peut poursuivre son mouvement sous l'effet de l'inertie.

10. Utilisation d'un dispositif selon l'une quelconque des revendications précédentes, pour la commande d'une vanne de débit proportionnelle à commande pneumatique ou hydraulique.

11. Système comportant au moins deux dispositifs selon l'une quelconque des revendications précédentes structurellement identiques et associés à au moins deux flux d'entrée distincts sous pression, le système étant destiné à produire au moins deux flux de sortie distincts aptes à être mélangés entre eux, de manière à réguler et contrôler simultanément le débit et la composition du mélange de sortie.

12. Système selon la revendication 11, **caractérisé en ce que** chaque dispositif est indépendant dans son fonctionnement.

13. Système selon la revendication 11, **caractérisé en ce que** les circuits d'asservissement desdits deux dispositifs sont adaptés pour contrôler la proportion relative de chacun de deux flux correspondants dans ledit mélange.

14. Système selon la revendication 11, **caractérisé en ce qu'**au moins un premier dispositif présente un fonctionnement en compresseur, de manière à utiliser un flux d'entrée à pression atmosphérique.

15. Système selon la revendication 14, **caractérisé en ce que** ledit premier dispositif structurellement identique et fonctionnant en compresseur est entraîné mécaniquement par un autre dispositif modulaire fonctionnant normalement en moteur, ou alimenté électriquement à partir de la puissance électrique produite par ledit autre dispositif.

16. Utilisation d'un dispositif selon l'une quelconque des revendications 1 à 10 dans un ventilateur de réanimation pour réguler le débit de gaz délivré au patient à partir d'une source sous pression, le circuit d'asservissement présentant un fonctionnement cyclique représentatif d'une ventilation forcée ou assistée.

**17.** Utilisation d'un système selon l'une quelconque des revendications 11 à 13 dans un ventilateur de réanimation pour réguler le débit et la composition du gaz délivré au patient à partir d'une source d'oxygène et d'une source d'air sous pression, le circuit d'asservissement présentant un fonctionnement cyclique représentatif d'une ventilation forcée ou assistée.

**18.** Utilisation d'un système selon l'une quelconque des revendications 14 à 15 dans un ventilateur de réanimation pour réguler le débit et/ou la composition du gaz délivré au patient à partir d'une source d'oxygène sous pression et d'une source d'air à pression atmosphérique, le circuit d'asservissement présentant un fonctionnement cyclique représentatif d'une ventilation forcée ou assistée.

**19.** Utilisation d'un système selon l'une quelconque des revendications 11 à 13 comme mélangeur permettant de réguler le débit et la température d'un mélange réalisé à partir de deux sources d'eau sous pression à températures différentes.

**Patentansprüche**

**1.** Vorrichtung zum Umwandeln pneumatischer oder hydraulischer Energie in elektrische Energie, umfassend einen pneumatischen oder hydraulischen Motor (10), der von einem Druckfluid (16) angetrieben wird und einem elektrischen Generator (12; 1) zugeordnet ist, der an eine Regelschaltung (14) mit einer Eingangsimpedanz (Z) gekoppelt ist, **dadurch gekennzeichnet, dass** die Regelschaltung Mittel (2, 3; R, C) aufweist, die das direkte Regulieren des von der Vorrichtung gelieferten Fluiddurchsatzes ermöglichen, ohne Hinzufügung eines mechanischen, externen Zusatz-Durchflußregelorgans, indem die an Anschlußklemmen des Generators (12; 1) angeschlossene Eingangsimpedanz (Z) eingestellt wird.

**2.** Vorrichtung nach Anspruch 1, **dadurch gekennzeichnet, dass** die Regelschaltung das Regulieren der elektrischen Gesamtleistung ermöglicht, die an den Anschlußklemmen des Generators verbraucht wird.

**3.** Vorrichtung nach Anspruch 1 oder 2, **dadurch gekennzeichnet, dass** zum Gewährleisten eines eigenständigen Betriebs mit elektrischer Energie der elektrische Generator eine mittlere elektrische Leistung liefert, die ausreicht, um die Regelschaltung zu speisen.

**4.** Vorrichtung nach Anspruch 3, **dadurch gekennzeichnet, dass** der elektrische Generator intermittierend als Elektromotor betrieben werden kann, beispielsweise bei Verfügbarkeit einer externen elektrischen Energiequelle, wodurch der Regelbereich vergrößert werden kann.

**5.** Vorrichtung nach einem der vorhergehenden Ansprüche, **dadurch gekennzeichnet, dass** die Regelschaltung eine Einrichtung zum Speichern elektrischer Energie aufweist, beispielsweise einen Kondensator (C) oder eine Batterie.

**6.** Vorrichtung nach Anspruch 5, **dadurch gekennzeichnet, dass** die Regelschaltung (2) zum Überwachen der Geschwindigkeit der Zufuhr oder der Ladung der Einrichtung zum Speichern elektrischer Energie aufweist.

**7.** Vorrichtung nach Anspruch 5 oder 6, **dadurch gekennzeichnet, dass** die Regelschaltung eine Speiseschaltung (3) aufweist, die aus der Einrichtung zum Speichern elektrischer Energie (C) eine konstante Spannung liefert.

**8.** Vorrichtung nach einem der vorhergehenden Ansprüche, **dadurch gekennzeichnet, dass** die Regelschaltung eine regulierbare Einrichtung (R) zum Verbrauchen elektrischer Energie in Form von Joul'scher Energie aufweist, was das Regulieren der verbrauchten elektrischen Leistung ermöglicht.

**9.** Vorrichtung nach einem der vorhergehenden Ansprüche, **dadurch gekennzeichnet, dass**, wenn sie eine Durchsatzeinstellung mit einer Durchsatzphase von 0 aufweist, der Motor (10) während dieser Phase kurzgeschlossen wird und der elektrische Generator (12) an eine Impedanz mit einem höheren Wert angeschlossen wird, derart, dass der Wandler (1) seine Bewegung durch die Wirkung der Trägheit fortsetzen kann.

**10.** Verwendung einer Vorrichtung nach einem der vorhergehenden Ansprüche für das Steuern eines Durchsatzventils proportional zu einem pneumatischen oder hydraulischen Steuerbefehl.

**11.** System mit mindestens zwei Vorrichtungen nach einem der vorhergehenden Ansprüche, die baulich identisch sind, und denen mindestens zwei verschiedene Druck-Eingangsströme zugeordnet sind, wobei das System dazu ausgelegt ist, mindestens zwei verschiedene Ausgangsströme zu erzeugen, die untereinander vermischbar sind, derart, dass gleichzeitig der Durchsatz und die Zusammensetzung des Ausgangsgemisches geregelt und überwacht wird.

**12.** System nach Anspruch 11, **dadurch gekennzeichnet, dass** jede Vorrichtung in ihrer Arbeitsweise unabhängig ist.

**13.** System nach Anspruch 11, **dadurch gekennzeichnet, dass** die Regelschaltungen der beiden Vorrichtungen dazu ausgebildet sind, das relative Verhältnis jedes der beiden entsprechenden Ströme innerhalb des Gemisches zu kontrollieren.

**14.** System nach Anspruch 11, **dadurch gekennzeichnet, dass** zumindest eine erste Vorrichtung eine Kompressor-Betriebsweise aufweist, um einen Eingangsstrom bei Atmosphärendruck auszunutzen.

**15.** System nach Anspruch 14, **dadurch gekennzeichnet, dass** die erste, baulich identische und als Kompressor arbeitende Vorrichtung mechanisch von einer anderen modulartigen Vorrichtung angetrieben wird, die normalerweise als Motor arbeitet, oder elektrisch durch elektrische Leistung gespeist wird, die von der anderen Vorrichtung erzeugt wird.

**16.** Verwendung einer Vorrichtung nach einem der Ansprüche 1 bis 10 in einem Reanimations-Belüfter zum Regulieren des Gasdurchsatzes, der einem Patienten von einer Druckquelle zugeführt wird, wobei die Regelschaltung eine zyklische Betriebsweise aufweist, repräsentativ für eine erzwungene oder unterstützte Ventilation.

**17.** Verwendung eines Systems nach einem der Ansprüche 11 bis 13 in einem Reanimations-Belüfter zum Regulieren des Durchsatzes und der Zusammensetzung von Gas, welches einem Patienten von einer Sauerstoffquelle und einer Luftdruckquelle zugeführt wird, wobei die Regelschaltung eine zyklische Betriebsweise aufweist, repräsentativ für eine erzwungene oder unterstützte Ventilation.

**18.** Verwendung eines Systems nach einem der Ansprüche 14 bis 15 in einem Reanimations-Belüfter zum Regulieren des Durchsatzes und/oder der Zusammensetzung von Gas, welches einem Patienten aus einer Druck-Sauerstoffquelle und einer unter Atmosphärendruck stehenden Luftquelle zugeleitet wird, wobei die Regelschaltung eine zyklische Arbeitsweise aufweist, repräsentativ für eine erzwungene oder unterstützte Ventilation.

**19.** Verwendung eines Systems nach einem der Ansprüche 11 bis 13 als Mischvorrichtung, die das Regulieren des Durchsatzes und der Temperatur eines Gemisches ermöglicht, das aus zwei Druck-Wasserquellen verschiedener Temperaturen gebildet wird.

**Claims**

**1.** A device forming a converter of pneumatic or hydraulic energy into electrical energy, the device being of the type comprising a pneumatic or hydraulic motor (10) driven by a fluid under pressure (16) and associated with an electric generator (12; 1) connected to a servo-control circuit (14) having an input impedance (Z), the device being **characterised in that** said servo-control circuit has means (2, 3; R, C) enabling the flow rate of the fluid delivered by the device to be regulated directly, without adding an additional external member for mechanically regulating the flow rate, by adjusting said input impedance (Z) connected to the terminals of the generator (12; 1).

**2.** The device according to claim 1, **characterised in that** said servo-control circuit enables the regulation of the total electrical power consumed at the terminals of the generator.

**3.** The device according to claim 1 or claim 2, **characterised in that**, in order to provide operation that is self-contained in terms of electricity, the electric generator delivers sufficient mean electrical power for powering the servo-control circuit.

**4.** The device according to claim 3, **characterised in that** the electric generator can operate intermittently as an electric motor, e.g. when an external supply of electricity is available, thereby enabling the regulation ranges to be increased.

**5.** The device according to any one of the preceding claims, **characterised in that** said servo-control circuit includes electrical energy storage means such as a capacitor (C) or a storage battery.

**6.** The device according to claim 5, **characterised in that** said servo-control circuit includes a circuit (2) for controlling the rate at which said electrical energy storage means is fed or charged.

**7.** The device according to claim 5 or claim 6, **characterised in that** said servo-control circuit includes a supply circuit (3) delivering a constant voltage from the electrical energy storage means (C).

**8.** The device according to any one of the preceding claims, **characterised in that** said servo-control circuit includes adjustable means (R) for dissipating electrical energy by the Joule effect, thereby enabling the electrical power consumed to be regulated.

**9.** The device according to any one of the preceding claims, **characterised in that** when it is subjected to a flow rate reference in the form of pulses including zero flow stages, the motor (10) during said stage is short-circuited and the electric generator (12) is connected to a high value impedance so that said converter (1) can continue moving under the effect of inertia.

10. Use of a device according to any one of the preceding claims, for controlling a pneumatically or hydraulically controlled proportional flow rate valve.

11. A system comprising at least two devices according to any one of the preceding claims, said devices being structurally identical and associated with at least two distinct inlet flows under pressure, the system being designed to produce at least two distinct outlet flows suitable for being mixing together, in such a manner as to regulate and control both the flow rate and the composition of the outlet mixture.

12. The system according to claim, 11, **characterised in that** each device operates independently.

13. The system according to claim 11, **characterised in that** the servo-control circuits of both of said devices are adapted to control the relative fraction of each of the two corresponding flows in said mixture.

14. The system according to claim 11, **characterised in that** at least a first one of the devices can operate as a compressor so as to use an inlet flow at atmospheric pressure.

15. The system according to claim 14, **characterised in that** said first structurally identical device operating as a compressor is driven mechanically by another modular device operating normally as a motor, or is powered electrically from the electrical power produced by said other device.

16. Use of a device according to any one of claims 1 to 10, in a reanimation ventilator for regulating the flow of gas delivered to the patient from a source under pressure, the servo-control circuit operating cyclically in a manner that represents forced or assisted ventilation.

17. Use of a system according to any one of claims 11 to 13, in a reanimation ventilator for regulating the flow rate and the composition of the gas delivered to the patient from a source of oxygen and a source of air under pressure, the servo-control circuit operating cyclically in a manner representative of forced or assisted ventilation.

18. Use of a system according to claim 14 or 15, in a reanimation ventilator for regulating the flow rate and/or the composition of the gas delivered to the patient from a source of oxygen under pressure and from a source of air at atmospheric pressure, the servo-control circuit operating cyclically in a manner representative of forced or assisted ventilation.

19. Use of a system according to any one of claims 11 to 13, as a mixer for regulating the flow rate and the temperature of a mixture made from two sources of water under pressure and at different temperatures.

FIG.1

FIG.2

FIG.3

GAZ 1
SOUS
PRESSION

MELANGE

GAZ 2
SOUS
PRESSION

FIG. 4

COMPRESSEUR

MOTEUR

GAZ 1
A PRESSION
ATMOSPHERIQUE

MELANGE

GAZ 2
SOUS
PRESSION

FIG. 5